# EUROPEAN PATENT APPLICATION

(11) **EP 4 501 107 A1**
(43) Date of publication of application: **05.02.2025**
(21) Application number: 23780255.8
(22) Date of filing: 24.03.2023
(51) Int. Cl.: A01K 85/00, C08L 101/16

(54) **BIODEGRADABLE ARTIFICIAL BAIT COMPOSITION AND BIODEGRADABLE ARTIFICIAL BAIT**

(30) Priority: 31.03.2022 JP 2022059537
(71) Applicant: DAINICHISEIKA COLOR & CHEMICALS MFG. CO., LTD., Chuo-ku Tokyo 103-8383 (JP)
(72) Inventor: ASO Yu, Tokyo 103-8383 (JP); KIKUCHI Yoshi, Tokyo 103-8383 (JP); OGAWA Shingo, Tokyo 103-8383 (JP); KOBAYASHI Takashi, Tokyo 103-8383 (JP)
(74) Representative: Wächtershäuser & Hartz Patentanwaltspartnerschaft mbB
(86) International application number: PCT/JP2023/011996
(87) International publication number: WO 2023/190245

(57) **Abstract**

There is provided a biodegradable artificial bait composition capable of producing a biodegradable artificial bait that gives less influence on organisms and the natural environment and is more practical. The biodegradable artificial bait composition is a composition to be used for an artificial bait for fishing, the composition comprising 10 to 30% by mass of gelatin, 25 to 80% by mass of a polyhydric alcohol; 9 to 55% by mass of water, and 0.005 to 3% by mass of at least one crosslinking agent selected from the group consisting of alum, transglutaminase, monosaccharides, and polyphenols.

## Description

### Technical Field

The present invention relates to a biodegradable artificial bait composition and a biodegradable artificial bait.

### Background Art

As baits which are used for fishing fishes and shellfishes, used are live baits which are used without processing living small animals such as a eunicid, a clam worm, a shrimp, an earthworm, and small fishes; natural animal baits such as slices of fishes and shellfishes; and pseudo-baits such as a fishing fly and a lure which simulate the live baits and the natural animal baits. In addition, as intermediate baits between the natural baits and the pseudo-baits, artificial baits produced by appropriately combining elements such as odor, tactile impression, and a shape which are similar to those of the natural bait are also used. Herein, such artificial baits and pseudo-baits described above are collectively referred to as artificial baits.

Artificial baits such as lures are frequently used because: some users who do fishing have an aversion to the motion, odor, and the like of the live baits when handling the live baits; the live baits are highly difficult to handle, such as maintaining freshness and storing them; and the live baits need to be purchased every time, which is troublesome. Lures are broadly classified into hard lures (also referred to as hard baits) shaped with a hard material such as a hard plastic or a metal and soft lures (also referred to as soft baits or worms) shaped with a soft material. Soft lures are frequently used as target fish for both seawater fishes and freshwater fishes because of the advantages in that: for example, the soft lures are softer than the hard lures and therefore are less likely to cause a sense of discomfort when fish bites into them; and the soft lures are more likely to reproduce delicate motions like a creature according to water flow than the hard lures. As soft materials for forming soft lures, soft resins, such as polyvinyl chloride and an ethylene-vinyl acetate copolymer each containing a plasticizer added thereto, and a thermoplastic elastomer; synthetic rubber, such as silicone rubber; and the like are used (for example, see Patent Literatures 1 to 3).

Artificial baits produced using the above-described soft resins, synthetic rubbers, and the like are hardly degradable, and therefore such artificial baits may remain in nature without being degraded when discarded after use, dropped from a fishing rod into the sea, a lake, a river, or the like, or ingested by fish, which may cause environmental contamination or environmental destruction. Thus, in recent years, biodegradable artificial baits have been developed, which can degraded with the lapse of a certain period of time even when left in nature from the viewpoint of environmental protection.

For example, Patent Literature 4 proposes an artificial bait obtained by shaping a resin composition containing a polyhydroxyalkanoate, which is a biodegradable resin, a polystyrene-based elastomer, and liquid paraffin each in a predetermined amount. In addition, Patent Literature 5 proposes a biodegradable artificial bait composition obtained by adding glycerol, a condiment, and an aldehyde, such as glyoxal (another name: oxalic acid aldehyde) and a formaldehyde donor, as a crosslinking agent to an aqueous gelatin solution. Further, Patent Literature 6 proposes a biodegradable artificial bait formed of a gelled product of a gelatin composition containing at least one crosslinking component of an epoxy crosslinking agent and an aldehyde crosslinking agent, and gelatin. Furthermore, Patent Literature 7 proposes a biodegradable soft worm using native-type gellan gum.

### Citation List

### Patent Literature

Patent Literature 1: Japanese Patent Laid-Open No. 11-289922
Patent Literature 2: Japanese Patent Laid-Open No. 2000-333558
Patent Literature 3: Japanese Patent Laid-Open No. 2005-124557
Patent Literature 4: Japanese Patent Laid-Open No. 2000-157103
Patent Literature 5: Japanese Patent Laid-Open No. 2002-223670
Patent Literature 6: Japanese Patent Laid-Open No. 2008-022784
Patent Literature 7: Japanese Patent Laid-Open No. 11-046626

### Summary of Invention

### Technical Problem

Although biodegradable resins are used in the artificial bait disclosed in Patent Literature 4, significant amounts of polystyrene-based elastomers and liquid paraffin are also used in combination with the biodegradable resins, and therefore these substances remain in nature and may cause environmental contamination.

Further, the artificial bait disclosed in Patent Literature 4 contains a polystyrene-based elastomer and liquid paraffin, and the artificial baits disclosed in Patent Literatures 5 and 6 contain a chemical crosslinking agent, such as an aldehyde or an epoxy compound. Therefore, there are concerns about the harm to fishes and shellfishes that have ingested such artificial baits, and influence on marine animals that ingest the fishes and shellfishes, which by extension influences the natural environment. In particular, the influence of aldehydes on the human body and the environment has been regarded as a problem year by year. The artificial bait disclosed in Patent Literature 7 has a problem in that it is difficult to maintain the shape as a bait.

On the other hand, with the increase in popularity of fishing as a hobby and the increase in fishing population in recent years, the amount of artificial baits used has been rapidly increasing due to the convenience of artificial baits. With such a rapid increase, large amounts of artificial baits have been left in the environment. As a result, the influence on organisms and nature has become significant. In fact, it is said that there are fishing spots where the use of soft worms is prohibited. In addition, the above-mentioned Patent Literature 4 states that the artificial bait disclosed therein is gradually decomposed in soil, but it is predicted that it takes a longer time (several years or more) for complete decomposition in actual water in consideration of the environment. For this reason, the need for an artificial bait which can be more rapidly decomposed even when left in the environment has been increasing more and more from the viewpoint of environmental conservation.

Thus, the present invention intends to provide a biodegradable artificial bait composition capable of producing a biodegradable artificial bait that gives less influence on organisms and the natural environment and is more practical as compared to those in the conventional techniques.

### Solution to Problem

The present invention provides a biodegradable artificial bait composition being a composition to be used for an artificial bait for fishing, the composition comprising: 10 to 30% by mass of gelatin; 25 to 80% by mass of a polyhydric alcohol; 9 to 55% by mass of water, and 0.005 to 3% by mass of at least one crosslinking agent selected from the group consisting of alum, transglutaminase, monosaccharides, and polyphenols.

### Advantageous Effects of Invention

According to the present invention, it is possible to provide a biodegradable artificial bait composition capable of producing a biodegradable artificial bait that gives less influence on organisms and the natural environment and is more practical.

### Brief Description of Drawings

[Figure 1] Figure 1 is a graph showing the results of relative cell count by cytotoxicity tests in Examples and Comparative Examples.
[Figure 2] Figure 2 is a micrograph showing a microscopic image by cytotoxicity tests in Examples.
[Figure 3] Figure 3 is a micrograph showing a microscopic image by cytotoxicity tests in Comparative Examples.

### Description of Embodiments

Hereinafter, embodiments of the present invention will be described, but the present invention is not limited to the following embodiments.

### <Biodegradable Artificial Bait Composition>

A biodegradable artificial bait composition of one embodiment of the present invention (hereinafter, sometimes simply referred to as "artificial bait composition") is a composition to be used for an artificial bait for fishing. By shaping the artificial bait composition, a biodegradable artificial bait (hereinafter, sometimes simply referred to as "artificial bait") shaped into a desired shape can be obtained as a shaped body. Just as described above, the "artificial bait composition" and the "artificial bait" as used herein are distinguished in terms of wording, the "artificial bait" is defined as the artificial bait composition after being shaped into a shape at the time of use as an artificial bait.

The artificial bait composition of the present embodiment contains 10 to 30% by mass of gelatin, 25 to 80% by mass of a polyhydric alcohol, 9 to 55% by mass of water, and 0.005 to 3% by mass of at least one crosslinking agent selected from the group consisting of alum, transglutaminase, monosaccharides, and polyphenols.

When the artificial bait composition contains gelatin, a polyhydric alcohol, water, and a particular crosslinking agent as described above each in a particular proportion as described above, thereby an artificial bait that is excellent in biodegradability, gives less influence on organisms and the natural environment, and is more practical can be produced. Therefore, it is made possible to produce an artificial bait that can be easily and completely decomposed with the passage of time and can be easily made harmless even when discarded in the sea, lakes, rivers, fishing spots, and the like.

As described above, the artificial bait composition is capable of producing a practical artificial bait and specifically can take the form of elastomer or gel (a state in which a colloidal dispersion system using a liquid as a dispersion medium is solidified) due to the above-described formulation. In addition, the artificial bait composition is suitable for mass production by injection molding or the like, and therefore is capable of producing a biodegradable artificial bait at low costs. Further, it is possible to produce an artificial bait that can maintain its shape so that it can be easily set on a fishing rod or the like, and that has water resistance and strength to such an extent that it does not disintegrate immediately when placed in the sea, a lake, or the like. In addition, it is possible to produce an artificial bait that has heat resistance to such an extent that it can withstand the temperature inside an automobile (about 50 to about 70°C), which is the main means of moving, transportation, and storage to a fishing spot when used in summer.

Hereinafter, a preferable formulation and the like of the artificial bait composition will be described from the viewpoint of easily obtaining the effects as described above and other viewpoints.

The artificial bait composition contains gelatin. Gelatin is a natural polymer generally obtained by hydrolyzing collagen, which is a protein component present in skins, bones, cartilages, tendons, and the like of animals. In addition, the content of gelatin is 10% by mass or more and 30% by mass or less based on the total mass of the artificial bait composition. Therefore, it is possible to obtain an artificial bait composition and an artificial bait each excellent in biodegradability.

The origin of the gelatin is not particularly limited, and examples thereof include pig skin, pig bone, cow skin, cow bone, fish scales, fish skin, and a combination thereof. The gelatin may be subjected to any pretreatment such as an acid treatment or an alkali treatment, and the molecular weight thereof is not particularly limited, but a gelatin having a gel strength of 200 bloom or more in terms of a bloom value is preferable. Commercially available gelatin can be used because of easy availability.

In general, a colloidal aqueous solution of gelatin has a property of being reversibly changed by temperature, that is, causing solation by heating, in which gelatin is dissolved, and being solidified into a gel by cooling. As just described above, gelatin generally swells and collapses in water in a short period of time because gelatin easily absorbs water and swells, and is easily melted by a rise in temperature in summer because gelatin has low heat resistance. Therefore, when a crosslinking agent to be described below is contained in the artificial bait composition of the present embodiment, thereby practically usable water resistance and heat resistance are imparted. In addition, physical properties, such as hardness, elasticity, texture, and flexibility, of the artificial bait composition and the artificial bait can be adjusted by adjusting the amount of each of gelatin, the crosslinking agent, the polyhydric alcohol, and water within a particular range.

The content of the gelatin is 10% by mass or more, preferably 11% by mass or more, more preferably 12% by mass or more, still more preferably 14% by mass or more, from the viewpoint of imparting mechanical strength. On the other hand, the content of the gelatin is 30% by mass or less, preferably 28% by mass or less, more preferably 27.5% by mass or less, still more preferably 25% by mass or less, from the viewpoint of ensuring the contents of the crosslinking agent and the like to be described later so as to easily impart practically usable water resistance and heat resistance.

The artificial bait composition contains a polyhydric alcohol. The polyhydric alcohol refers to an alcohol having two or more hydroxy group in one molecule. In the artificial bait composition, the polyhydric alcohol is a component that can form a liquid medium (dispersion medium in gel) together with water to be described later.

The content of the polyhydric alcohol is 25% by mass or more and 80% by mass or less based on the total mass of the artificial bait composition. By adjusting the content of the polyhydric alcohol within the above range, physical properties, such as hardness, elasticity, tactile impression, and flexibility, of the artificial bait composition and the artificial bait are easily adjusted. In addition, since the artificial bait composition contains the polyhydric alcohol in a particular proportion as described above, improvements in the strength, heat resistance, water resistance, antiseptic performance, and the like of the artificial bait composition and the artificial bait can be expected more than in the case where the dispersion medium consists of water. Further, the polyhydric alcohol generally has a higher boiling point than water, and therefore the following can be expected as compared to the case where the dispersion medium consists of water: evaporation of the dispersion medium from the artificial bait composition and the artificial bait is suppressed more, which makes a change in the shape and changes in the physical properties smaller; and the product quality is retained over a longer period of time.

From the viewpoint of imparting flexibility and preventing rot, the content of the polyhydric alcohol is 25% by mass or more, preferably 35% by mass or more, more preferably 42.5% by mass or more, and still more preferably 50% by mass or more. On the other hand, from the viewpoint of ensuring the content of water that is used for dissolving gelatin, which is a water-soluble molecule, the content of the polyhydric alcohol is 80% by mass or less, preferably 75% by mass or less, more preferably 70% by mass or less, still more preferably 60% by mass or less.

Examples of the polyhydric alcohol include ethylene glycol, diethylene glycol, polyethylene glycol, propylene glycol, dipropylene glycol, polypropylene glycol, 1,3-propanediol, 1,2-butylene glycol, 1,3-butylene glycol, 1,2-pentanediol, 1,5-pentanediol, 1,2-hexanediol, 1,6-hexanediol, hexylene glycol, erythritol, pentaerythritol, dipentaerythritol, glycerol, diglycerol, triglycerol, polyglycerol, and sugar alcohols (such as, for example, sorbitol, mannitol, xylitol, reduced maltose, reduced lactose, and reduced syrup). The artificial bait composition can contain one or more polyhydric alcohols. Among the polyhydric alcohols, the polyhydric alcohol is preferably at least one selected from the group consisting of glycerol, 1,3-butylene glycol, propylene glycol, and sugar alcohols, more preferably at least one selected from the group consisting of glycerol and propylene glycol, still more preferably glycerol.

The artificial bait composition contains water. In the artificial bait composition, water is a component that can form a dispersion medium in gel together with the above-described polyhydric alcohol. The water is preferably deionized water or ion-exchanged water.

The content of water is 9% by mass or more and 55% by mass or less based on the total mass of the artificial bait composition. By adjusting the content of water within the above range, physical properties, such as hardness, elasticity, tactile impression, and flexibility, of the artificial bait composition and the artificial bait are easily adjusted. In addition, since the artificial bait composition contains water in a particular proportion as described above, improvements in the flexibility and the like of the artificial bait composition and the artificial bait can be expected more, and production costs can be cut more, than in the case where the dispersion medium consists of a polyhydric alcohol.

The content of water is 9% by mass or more, preferably 10% by mass or more, more preferably 12.5% by mass or more, still more preferably 15% by mass or more, from the viewpoint of dissolving gelatin, which is a water-soluble molecule, and a polysaccharide which can be contained in the artificial bait composition and is an arbitrary component to be described later. On the other hand, the content of water is 55% by mass or less, preferably 50% by mass or less, more preferably 45% by mass or less, still more preferably 35% by mass or less, from the viewpoint of ensuring mechanical strength.

The artificial bait composition contains at least one crosslinking agent (herein, sometimes referred to as "particular crosslinking agent") selected from the group consisting of alum, transglutaminase, monosaccharides, and polyphenols. In the artificial bait composition, the alum, transglutaminase, monosaccharides, and polyphenols can crosslink gelatin due to crosslinking by a metal salt, crosslinking by an enzyme, reductive action, and oxidative/reductive action, respectively. These crosslinking agents have remarkably lower cytotoxicity and environmental load than chemical crosslinking agents such as aldehydes and epoxy compounds, and therefore the artificial bait composition gives less influence on organisms and the natural environment as compared to those in the conventional techniques.

The content of the crosslinking agent, that is the total content of the alum, transglutaminase, monosaccharides, and polyphenols, is 0.005% by mass or more and 3% by mass or less based on the total mass of the artificial bait composition. Therefore, an elastic artificial bait composition and an elastic artificial bait can be obtained, and in addition, an artificial bait composition and an artificial bait each having strength, water resistance, heat resistance, shape retentivity, and the like which are practically usable can be obtained. By adjusting the content of the crosslinking agent within the above range, physical properties, such as hardness, elasticity, tactile impression, and flexibility, of the artificial bait composition and the artificial bait are easily adjusted.

From the viewpoint of strength, water resistance, heat resistance, and the like, the content of the crosslinking agent is 0.005% by mass or more, preferably 0.008% by mass or more, more preferably 0.01% by mass or more, still more preferably 0.05% by mass or more. On the other hand, from the viewpoint of hardness, elasticity, tactile impression, flexibility, and the like, the content of the crosslinking agent is 3% by mass or less, preferably 2% by mass or less, more preferably 1.5% by mass or less, still more preferably 1% by mass or less.

The alum to be used as the crosslinking agent is a double salt between a sulfate of a monovalent cation (M₂^{I}(SO₄)) and a sulfate of a trivalent metal ion (M₂^{III}(SO₄)₃). Examples of suitable alum include aluminum potassium sulfate dodecahydrate (AlK(SO₄)₂·12H2O); also referred to as potassium alum), anhydrous aluminum potassium sulfate (AlK(SO₄)₂; also referred to as burnt alum), aluminum sodium sulfate dodecahydrate (AlNa(SO₄)₂·12H₂O; also referred to as sodium alum), anhydrous aluminum sodium sulfate (AlNa(SO₄)₂; burnt sodium alum), aluminum ammonium sulfate dodecahydrate (AlNH₄(SO₄)₂·12H₂O; also referred to as ammonium alum), and anhydrous aluminum ammonium sulfate (AlNH₄(SO₄)₂; also referred to as burnt ammonium alum). One or more of these can be used. In addition, commercially available alum can be used because of easy availability. When a hydrate of alum is used, the content of the crosslinking agent (alum) means the content in terms of anhydride (alum).

The transglutaminase to be used as the crosslinking agent is an enzyme that causes crosslinking by an enzyme reaction and that has activity of catalyzing an acyl transfer reaction in which a glutamine residue in a protein or peptide is used as a donor and lysine residue is used as an acceptor. The origin of the transglutaminase is not particularly limited, and examples thereof include those derived from mammals, fishes, and microorganisms. One or more of these can be used. In addition, commercially available transglutaminase can be used because of easy availability.

Examples of the monosaccharide to be used as the crosslinking agent include glucose, fructose, galactose, and ribose. One or more of these can be used. These exhibit reducibility in an aqueous solution, react with a protein or the like, and serve as an intramolecular or intermolecular crosslinking point. The crosslinking reaction using a monosaccharide is a reaction that can occur even in food or the like and therefore is an extremely safe crosslinking method.

Examples of the polyphenol to be used as the crosslinking agent include catechins, persimmon tannin, tannic acid, and lignin. One or more of these can be used. Polyphenols obtained mainly from plants are preferable. With respect to these polyphenols, an oxidation product of the polyphenol produced by an oxidation reaction in the air reacts with proteins, and the product serves as a starting point to cause crosslinking between the proteins. The crosslinking reaction using a polyphenol, as well as the crosslinking reaction using a monosaccharide, is also a reaction that can occur even in food or the like and therefore is a highly safe crosslinking method.

The artificial bait composition preferably further contains a polysaccharide. The polysaccharide is a high-molecular-weight saccharide obtained from plants, algae, microorganisms, or the like, in which two or more monosaccharides are bonded. In the artificial bait composition, the polysaccharide, when combined with the above-described gelatin, gives further mechanical strength and can adjust the heat resistance, the water resistance, and the like.

The content of the polysaccharide is preferably 0.01% by mass or more and 10% by mass or less based on the total mass of the artificial bait composition. By adjusting the content of the polysaccharide within the above-described range, physical properties, such as hardness, elasticity, tactile impression, and flexibility, of the artificial bait composition and the artificial bait are easily adjusted. In addition, when the artificial bait composition contains a polysaccharide in a particular proportion as described above, thereby further improvements in strength, heat resistance, water resistance, and the like of the artificial bait can be expected. Further, a polysaccharide generally has high hydrophilicity, and therefore evaporation of water from the artificial bait composition and the artificial bait are suppressed, so that little change in shape and physical properties, maintenance of product quality over a long period of time, and the like can also be expected.

Examples of the polysaccharide include carrageenan, agar, pectin, guar gum, locust bean gum, gum arabic, tamarind seed gum, tara gum, gellan gum, xanthan gum, alginic acid, glucomannan, starch, cellulose, chitin, chitosan, and chemically modified products thereof. According to the required properties, one or more of the above-described polysaccharides can be contained in the artificial bait composition. Among the above polysaccharides, the polysaccharide is preferably at least one selected from the group consisting of carrageenan, agar, pectin, gellan gum, and glucomannan, more preferably gellan gum.

All of the above-described gelatin, polyhydric alcohol, water, and particular crosslinking agent, which are essential components of the artificial bait composition, and the polysaccharide which may be further contained in addition to those components are less harmful to organisms and the natural environment. Therefore, the use of these components as main components makes it possible to obtain an artificial bait composition and an artificial bait which can be evaluated as being substantially non-toxic. In addition, it is possible to make the taste, the odor, the oral sensation, and the like of bait closer to those of natural bait, so that improvements in a catch of fish can also be expected. Further, it is also possible to obtain an artificial bait composition and an artificial bait which exhibit neutral buoyancy, and therefore it can be expected that the artificial bait composition and the artificial bait can make a motion to attract fish without being made heavy with worm oil or the like.

Examples of the above-described toxicity include cytotoxicity, genotoxicity by the Ames test, and toxicity indices related to volatile organic compounds (VOCs). Specifically, with regard to evaluation of cytotoxicity as one example, it is possible to obtain an artificial bait composition and an artificial bait which are determined not to have cytotoxicity in a cytotoxicity test specified in ISO10993-5:2009. The determination of not having cytotoxicity in a cytotoxicity test described above means that it is determined not to have cytotoxicity by at least one method of the measurement methods specified in ISO 10993-5:2009. For example, the determination according to the cytotoxicity test by the neutral red uptake assay is determined by the quantitative evaluation in the cytotoxicity test. When the cell viability is decreased by 30% or more, it is determined that there is a cytotoxic effect, and when the cell viability is not decreased by 30% or more, it is determined that there is no cytotoxicity.

From the viewpoint of easily obtaining the above-described effects regarding toxicity such as cytotoxicity, a catch of fishing, and the like the total content of the essential components (gelatin, polyhydric alcohol, water, and particular crosslinking agent) is preferably 80% by mass or more, more preferably 85% by mass or more, still more preferably 90% by mass or more, based on the total mass of the artificial bait composition. In addition, the artificial bait composition is preferably free from a component having toxicity such as cytotoxicity.

The artificial bait composition may contain an optional component other than the above-described gelatin, polyhydric alcohol, water, and particular crosslinking agent. Examples of the optional component include the above-described polysaccharide, natural animal baits such as slices of fishes and shellfishes, a coloring agent, a condiment, and a perfume. The use of one of these or combination of two or more of these even makes it possible to impart odor, taste, color, and the like that can enhance bites from fishes and shellfishes.

In addition, examples of the optional component include extenders and anti-blocking materials, such as calcium carbonate, talc, silica, and clay; reinforcing materials, such as wollastonite, potassium titanate, xonotlite, fibrous gypsum, a carbon fiber, a glass fiber, a plant fiber, a cellulose fiber, and a collagen fiber; emulsifiers, such as lecithin and sodium caseinate; foaming agents, such as ammonium hydrogen carbonate, sodium hydrogen carbonate, a baking powder, and a yeast powder; light scattering agents, such as titanium oxide, glass beads, calcium carbonate, an aluminum powder, mica, guanine crystal plate, and mother-of-pearl; and ultraviolet ray protective materials such as titanium oxide, zinc oxide, and iron oxides. The use of one of these or a combination of two or more of these even makes it possible to produce a more practical artificial bait.

From the viewpoint of ensuring the amount of the above-described essential components, the content of the optional component is preferably 20% by mass or less, more preferably 10% by mass or less, still more preferably 5% by mass or less, based on the total mass of the artificial bait composition.

The artificial bait composition is used for an artificial bait for fishing, as described above, and the particular composition thereof enables shaping such as injection molding, so that the artificial bait composition is preferably formed into a shape such that an artificial bait as a shaped body is easily shaped into a desired shape. Examples of such a preferred shape include a liquid and a solid (for example, in the form of elastomer or gel). In the case of a solid artificial bait composition, a liquid medium, such as the above-described polyhydric alcohol and water, is contained so as to be incorporated into the crosslinking structure formed of gelatin and the particular crosslinking agent in the artificial bait composition. Among the solid shapes, the artificial bait composition is more preferably formed into a block-like shape, a grain-like shape, a pellet-like shape, or a mince-like shape, and is still more preferably formed into a block-like shape, a grain-like shape, or a pellet-like shape. One example of the method for producing an artificial bait composition is described below giving, as an example, a method for producing an artificial bait composition having such a preferred shape.

The artificial bait composition can be produced by mixing the above-described gelatin, polyhydric alcohol, water, and particular crosslinking agent, and the optional component which is used as necessary in a ratio where the content of each component fall within the above-described particular proportion. In the mixing, the components are preferably mixed by heating so as to be uniformly mixed, and the artificial bait composition in the form of liquid is thereby preferably prepared. The temperature during mixing the components by heating is preferably 40 to 90°C, more preferably 50 to 80°C. A mixing machine, such as, for example, a kneader and any of various types of mixers, can be used for the mixing.

After the mixing, the liquid artificial bait composition is preferably poured into an appropriate mold and cooled to room temperature (for example, about 10 to about 30°C) to solidify the liquid artificial bait composition, and a solid block-shaped artificial bait composition in the form of elastomer or gel is thereby preferably prepared. Subsequently, the block-shaped artificial bait composition in the form of elastomer or gel is preferably crushed with a mincer or the like so as to have a diameter of about 5 to about 10 mm and is thereby preferably formed into a grain-like or pellet-like shape. Thus, above-described artificial bait composition having a preferred shape can be produced.

### <Artificial Bait Composition Product>

The biodegradable artificial bait composition contains 9 to 55% by mass or water as described above, and, on the other hand, contains 25 to 80% by mass a polyhydric alcohol, and therefore evaporation of water can be suppressed. For this reason, it is even possible to distribute the biodegradable artificial bait composition as it is to an artificial bait production site or the like without worrying about drying. In addition, the biodegradable artificial bait composition may be distributed to an artificial bait production site or the like in a product form that can suppress drying of the biodegradable artificial bait composition more. Examples of such a product form include a product form (artificial bait composition product) including a container; the above-described biodegradable artificial bait composition sealed in the container; and a preservation liquid sealed in the container.

Examples of the container in the artificial bait composition product include a box, a bag, a bottle, a can, and a cup. Among these, the container is preferably a tightly sealable container, more preferably a tightly sealable bag, bottle, can, or cup, or the like.

The preservation liquid is preferably an aqueous preservation liquid containing at least water because the artificial bait composition contains water. In addition, the preservation liquid more preferably contains the same components as in the liquid media (such as water and a polyhydric alcohol) contained in the artificial bait composition.

### <Biodegradable Artificial Bait>

A biodegradable artificial bait of one embodiment of the present invention can be obtained by shaping the above-described biodegradable artificial bait composition. As the shaping method, injection molding, extrusion molding, and compression molding can be employed. Among these, injection molding is preferable because shaping into a desired shape is made possible by making a metal mold, the injection molding is suitable for mass production, and an artificial bait can be produced at low costs. The temperature condition during the injection molding is more preferably 70 to 160°C.

The artificial bait obtained by shaping the artificial bait composition can also take the form of elastomer or gel. The shape of the artificial bait is not particularly limited, and examples thereof include shapes that simulate the shape of fish and simulate the organisms to be the baits for fishing objects, which have conventionally employed for artificial baits. Examples thereof include shapes that simulate small animals such as a eunicid, a clam worm, a shrimp, an earthworm, and small fishes.

Note that the hardness, elasticity, tactile impression, flexibility, and the like of the artificial bait may be adjusted by subjecting the artificial bait obtained by shaping the artificial bait composition to gamma ray irradiation or electron beam irradiation. In addition, the biodegradable artificial bait, as well as the above-described artificial bait composition product, is preferably distributed in the market in a product (artificial bait product) form including a container; the artificial bait sealed in the container; and a preservation liquid sealed in the container in order to suppress drying and contraction.

The biodegradable artificial bait can be produced by shaping the artificial bait composition described above in detail. The artificial bait composition contains gelatin, a polyhydric alcohol, water, and a particular crosslinking agent each in a particular amount, and therefore makes it possible to produce a biodegradable artificial bait that is excellent in biodegradability, gives less influence on organisms and the natural environment, and is more practical. Accordingly, the artificial bait composition and the biodegradable artificial bait obtained by shaping the artificial bait composition can have characteristics such that even when they are discarded in the sea, lakes, rivers, fishing spots, and the like, they can be easily and completely decomposed with the passage of time and can be easily made harmless. In addition, the artificial bait composition and the biodegradable artificial can have characteristics, such as shape retentivity, water resistance, heat resistance, and the like which are practically usable as an artificial bait for fishing.

As described above, one embodiment of the present invention can take the following formulations and forms.
[1] A biodegradable artificial bait composition being a composition to be used for an artificial bait for fishing, the composition containing:
   10 to 30% by mass of gelatin;
   25 to 80% by mass of a polyhydric alcohol;
   9 to 55% by mass of water, and
   0.005 to 3% by mass of at least one crosslinking agent selected from the group consisting of alum, transglutaminase, monosaccharides, and polyphenols.
[2] The biodegradable artificial bait composition according to [1], wherein the polyhydric alcohol is at least one selected from the group consisting of glycerol, 1,3-butylene glycol, propylene glycol, and sugar alcohols.
[3] The biodegradable artificial bait composition according to [1] or [2], further comprising 0.01 to 10% by mass of a polysaccharide.
[4] The biodegradable artificial bait composition according to any one of [1] to [3], determined to have no cytotoxicity in a cytotoxicity test specified in ISO 10993-5:2009.
[5] The biodegradable artificial bait composition according to any one of [1] to [4], formed into a block-like shape, a grain-like shape, or a pellet-like shape.
[6] A biodegradable artificial bait obtained by shaping the biodegradable artificial bait composition according to any one of [1] to [5].

### Examples

Hereinafter, the present invention will specifically be described based on Examples, but the present invention is not limited to these Examples.

### <Preparation of Materials>

The following gelatin, gellan gum, crosslinking agents, and condiment were prepared. Glycerol, ethylene glycol, reduced syrup, and 1,3-butylene glycol were used as the polyhydric alcohol, and deionized water was used as water.

- Gelatin: trade name "FGL 250SP," manufactured by Nitta Gelatin Inc.
- Gellan gum: trade name "KELCOGEL HM," manufactured by Sumitomo Pharma Food & Chemical Co., Ltd.
- Reduced syrup: trade name "SE600", manufactured by Bussan Food Science Co., Ltd.

### (Crosslinking Agent)

- Alum: trade name "Burnt Alum," manufactured by KENEI Pharmaceutical Co., Ltd.
- Transglutaminase powder: trade name "ACTIVA TG-S," manufactured by Ajinomoto Co., Inc.
- Glucose: manufactured by FUJIFILM Wako Pure Chemical Corporation
- Fructose: manufactured by Nissin Sugar Co., Ltd.
- Ribose: manufactured by FUJIFILM Wako Pure Chemical Corporation
- Tannic acid: manufactured by FUJIFILM Wako Pure Chemical Corporation
- 25% by mass aqueous glutaraldehyde solution: trade name "25% Glutaraldehyde Solution," manufactured by FUJIFILM Wako Pure Chemical Corporation
- 40% by mass aqueous glyoxal solution: trade name "40% Glyoxal Solution," manufactured by FUJIFILM Wako Pure Chemical Corporation
- Ethylene glycol diglycidyl ether: trade name of epoxy compound "DENACOL EX-810," manufactured by Nagase ChemteX Corporation

### (Condiment)

- Nam pla: "YOUKI Nam Pla," manufactured by YOUKI FOOD Co., Ltd.

### <Production of Artificial Bait Composition and Artificial Bait>

The above-described materials corresponding to the respective components were used and blended in such a way that: the composition (unit: % by mass) of each component was as shown in Table 1 (Table 1-1 to Table 1-4); and the resultant mixture was mixed with a kneader under a condition of making the mixture uniform while the temperature of the mixture was kept at 80°C, and thus a liquid mixture (artificial bait composition) was obtained. Subsequently, the mixture was poured into a female die for a soft worm and cooled at room temperature until the temperature of the mixture became about 20°C for the purpose of preparing an artificial bait.

First, whether a practical shaped body in the form of elastomer or gel was obtained or not by the above-described preparation method was checked. Whether a practical shaped body in the form of elastomer or gel was obtained or not was determined according to the following criteria: (a) the mixture is a solid that can be held by a hand, and even after the mixture is left to stand still on a horizontal plane at room temperature (about 23°C) for one day, the shape can be kept; (b) the mixture keeps flexibility even after it is left to stand for one week; (c) occurrence of microorganisms is not visually recognized even after it is left to stand for one week; (d) the mixture has stretchability; and (e) the mixture is not one clearly not having water resistance and heat resistance. When all of the above (a) to (e) are satisfied, the determination is that a practical shaped body in the form of elastomer or gel is obtained, and the field of practicality in Table 1 is indicated by "Good" as practical, or indicated by "Poor" as not practical in other cases. Note that specifically, with regard to each of the compositions with which a shaped body can be produced, an artificial bait in the form of elastomer or gel, the artificial bait having a spindle shape (shape that imitates fish) having a length in the longitudinal direction of about 7.5 cm, having a diameter of about 1 cm at the thickest portion, and having a mass of about 3 g, was obtained.

**Table 1-1: Compositions (unit: % by mass) and evaluation of practicality of artificial bait compositions produced in Examples**

| | Examples | | | | | | |
|---|---|---|---|---|---|---|---|
| | 1 | 2 | 3 | 4 | 5 | 6 | 7 |
| Gelatin | 20 | 20 | 20 | 30 | 10 | 10 | 30 |
| Gellan gum | 0 | 0 | 0 | 0 | 0 | 0 | 0 |
| Glycerol | 53 | 53 | 0 | 48 | 58 | 80 | 35 |
| Ethylene glycol | 0 | 0 | 0 | 0 | 0 | 0 | 0 |
| 1,3-Butylene glycol | 0 | 0 | 53 | 0 | 0 | 0 | 0 |
| Reduced syrup | 0 | 0 | 0 | 0 | 0 | 0 | 0 |
| Water | 26.86 | 26.91 | 26.86 | 21.86 | 31.86 | 9.86 | 34.86 |
| Alum | 0.14 | 0 | 0.14 | 0.14 | 0.14 | 0.14 | 0.14 |
| Transglutaminase | 0 | 0.09 | 0 | 0 | 0 | 0 | 0 |
| Glucose | 0 | 0 | 0 | 0 | 0 | 0 | 0 |
| Fructose | 0 | 0 | 0 | 0 | 0 | 0 | 0 |
| Ribose | 0 | 0 | 0 | 0 | 0 | 0 | 0 |
| Tannic acid | 0 | 0 | 0 | 0 | 0 | 0 | 0 |
| Glutaraldehyde | 0 | 0 | 0 | 0 | 0 | 0 | 0 |
| Glyoxal | 0 | 0 | 0 | 0 | 0 | 0 | 0 |
| Ethylene glycol diglycidyl ether | 0 | 0 | 0 | 0 | 0 | 0 | 0 |
| Nam pla | 0 | 0 | 0 | 0 | 0 | 0 | 0 |
| Practicality | Good | Good | Good | Good | Good | Good | Good |

**Table 1-2: Compositions (unit: % by mass) and evaluation of practicality of artificial bait compositions produced in Examples**

| | Examples | | | | | |
|---|---|---|---|---|---|---|
| | 8 | 9 | 10 | 11 | 12 | 13 |
| Gelatin | 20 | 10 | 20 | 20 | 20 | 20 |
| Gellan gum | 0 | 0 | 0 | 0 | 0 | 0 |
| Glycerol | 25 | 80 | 53 | 53 | 53 | 53 |
| Ethylene glycol | 0 | 0 | 0 | 0 | 0 | 0 |
| 1,3-Butylene glycol | 0 | 0 | 0 | 0 | 0 | 0 |
| Reduced syrup | 0 | 0 | 0 | 0 | 0 | 0 |
| Water | 54.86 | 9.86 | 24 | 26.995 | 24 | 26.995 |
| Alum | 0.14 | 0.14 | 3 | 0.005 | 0 | 0 |
| Transglutaminase | 0 | 0 | 0 | 0 | 3 | 0.005 |
| Glucose | 0 | 0 | 0 | 0 | 0 | 0 |
| Fructose | 0 | 0 | 0 | 0 | 0 | 0 |
| Ribose | 0 | 0 | 0 | 0 | 0 | 0 |
| Tannic acid | 0 | 0 | 0 | 0 | 0 | 0 |
| Glutaraldehyde | 0 | 0 | 0 | 0 | 0 | 0 |
| Glyoxal | 0 | 0 | 0 | 0 | 0 | 0 |
| Ethylene glycol diglycidyl ether | 0 | 0 | 0 | 0 | 0 | 0 |
| Nam pla | 0 | 0 | 0 | 0 | 0 | 0 |
| Practicality | Good | Good | Good | Good | Good | Good |

**Table 1-3: Compositions (unit: % by mass) and evaluation of practicality of artificial bait compositions produced in Examples**

| | Examples | | | | | | |
|---|---|---|---|---|---|---|---|
| | 14 | 15 | 16 | 17 | 18 | 19 | 20 |
| Gelatin | 20 | 20 | 20 | 20 | 20 | 20 | 20 |
| Gellan gum | 0.5 | 0.5 | 0 | 0 | 0 | 0 | 0 |
| Glycerol | 53 | 53 | 53 | 53 | 53 | 53 | 49 |
| Ethylene glycol | 0 | 0 | 0 | 0 | 0 | 0 | 0 |
| 1,3-Butylene glycol | 0 | 0 | 0 | 0 | 0 | 0 | 0 |
| Reduced syrup | 0 | 0 | 0 | 0 | 0 | 0 | 4 |
| Water | 26.36 | 26.41 | 24 | 26 | 26 | 26 | 26.91 |
| Alum | 0.14 | 0 | 0 | 0 | 0 | 0 | 0 |
| Transglutaminase | 0 | 0.09 | 0 | 0 | 0 | 0 | 0.09 |
| Glucose | 0 | 0 | 3 | 0 | 0 | 0 | 0 |
| Fructose | 0 | 0 | 0 | 1 | 0 | 0 | 0 |
| Ribose | 0 | 0 | 0 | 0 | 1 | 0 | 0 |
| Tannic acid | 0 | 0 | 0 | 0 | 0 | 1 | 0 |
| Glutaraldehyde | 0 | 0 | 0 | 0 | 0 | 0 | 0 |
| Glyoxal | 0 | 0 | 0 | 0 | 0 | 0 | 0 |
| Ethylene glycol diglycidyl ether | 0 | 0 | 0 | 0 | 0 | 0 | 0 |
| Nam pla | 0 | 0 | 0 | 0 | 0 | 0 | 0 |
| Practicality | Good | Good | Good | Good | Good | Good | Good |

**Table 1-4: Compositions (unit: % by mass) and evaluation of practicality of artificial bait compositions produced in Comparative Examples**

| | Comparative Examples | | | | | |
|---|---|---|---|---|---|---|
| | 1 | 2 | 3 | 4 | 5 | 6 |
| Gelatin | 11 | 14 | 11.5 | 20 | 40 | 0 |
| Gellan gum | 0 | 0 | 0 | 0 | 0 | 0 |
| Glycerol | 0 | 42 | 0 | 53 | 40 | 63 |
| Ethylene glycol | 76 | 0 | 82.8 | 0 | 0 | 0 |
| 1,3-Butylene glycol | 0 | 0 | 0 | 0 | 0 | 0 |
| Reduced syrup | 0 | 0 | 0 | 0 | 0 | 0 |
| Water | 12.6 | 35 | 0 | 27 | 19.86 | 36.86 |
| Alum | 0 | 0 | 0 | 0 | 0.14 | 0.14 |
| Transglutaminase | 0 | 0 | 0 | 0 | 0 | 0 |
| Glucose | 0 | 0 | 0 | 0 | 0 | 0 |
| Fructose | 0 | 0 | 0 | 0 | 0 | 0 |
| Ribose | 0 | 0 | 0 | 0 | 0 | 0 |
| Tannic acid | 0 | 0 | 0 | 0 | 0 | 0 |
| Glutaraldehyde | 0.4 | 0 | 0 | 0 | 0 | 0 |
| Glyoxal | 0 | 2 | 0 | 0 | 0 | 0 |
| Ethylene glycol diglycidyl ether | 0 | 0 | 5.7 | 0 | 0 | 0 |
| Nam pla | 0 | 7 | 0 | 0 | 0 | 0 |
| Practicality | good | Good | Good | Poor | Poor | Poor |

**Table 1-5: Compositions (unit: % by mass) and evaluation of practicality of artificial bait compositions produced in Comparative Examples**

| | Comparative Examples | | | | | |
|---|---|---|---|---|---|---|
| | 7 | 8 | 9 | 10 | 11 | 12 |
| Gelatin | 5 | 45 | 10 | 15 | 20 | 20 |
| Gellan gum | 0 | 0 | 0 | 0 | 0 | 0 |
| Glycerol | 90 | 0 | 24.86 | 84.86 | 52 | 52 |
| Ethylene glycol | 0 | 0 | 0 | 0 | 0 | 0 |
| 1,3-Butylene glycol | 0 | 0 | 0 | 0 | 0 | 0 |
| Reduced syrup | 0 | 0 | 0 | 0 | 0 | 0 |
| Water | 4.86 | 54.86 | 65 | 0 | 23 | 23 |
| Alum | 0.14 | 0.14 | 0.14 | 0.14 | 5 | 0 |
| Transglutaminase | 0 | 0 | 0 | 0 | 0 | 5 |
| Glucose | 0 | 0 | 0 | 0 | 0 | 0 |
| Fructose | 0 | 0 | 0 | 0 | 0 | 0 |
| Ribose | 0 | 0 | 0 | 0 | 0 | 0 |
| Tannic acid | 0 | 0 | 0 | 0 | 0 | 0 |
| Glutaraldehyde | 0 | 0 | 0 | 0 | 0 | 0 |
| Glyoxal | 0 | 0 | 0 | 0 | 0 | 0 |
| Ethylene glycol diglycidyl ether | 0 | 0 | 0 | 0 | 0 | 0 |
| Nam pla | 0 | 0 | 0 | 0 | 0 | 0 |
| Practicality | Poor | Poor | Poor | Poor | Poor | Poor |

Subsequently, among Examples and Comparative Examples where the above-described artificial bait in the form of elastomer or gel, the artificial bait having a spindle shape (shape that imitates fish), was able to be prepared, each of the artificial baits of Examples 1, 2, and 14 to 20 and Comparative Examples 1 to 4 was used as a sample for evaluation (hereinafter, referred to as "sample A") and was subjected to a heat resistance test and water resistance test as described below. The results of these tests are shown in Table 2 (Table 2-1 and Table 2-2).

### <Heat Resistance Test>

The heat resistance at 50°C that is practically required for a soft worm was evaluated for samples A of Examples 1, 2, and 14 to 20 and Comparative Examples 1 to 4 was evaluated. The testing method is as follows: each sample A was placed in a thermostatic chamber set at 50°C for 1 hour and then taken out; sample A was visually checked; and the heat resistance was evaluated by whether the shape before placing the sample in the thermostatic chamber was able to be kept or not. Sample A where the shape was able to be kept was determined to have good heat resistance and represented by "Good" in Table 2 below. Sample A where the shape was not able to be kept was determined to have poor heat resistance and represented by "Poor" in Table 2 below.

### <Water Resistance Test>

The water resistance that is practically required for a soft worm was evaluated for samples A of Examples 1, 2, and 14 to 20 and Comparative Examples 1 to 4 was evaluated. The testing method is as follows: each sample A was immersed in tap water set at normal temperature for 3 hours and then taken out; the shape of the sample was visually checked; and the water resistance was evaluated by whether the shape before immersing the sample was able to be kept or not and whether the sample can be put on a fishhook or not. Sample A where the shape was able to be kept and the sample was able to be put on a fishhook was determined to have good water resistance and represented by "Good" in Table 2 below. Sample A where the shape was not able to be kept or the sample was not able to be put on a fishhook was determined to have poor water resistance and represented by "Poor" in Table 2 below.

**Table 2-1: Results of evaluations of heat resistance and water resistance in Examples**

| | Example 1 | Example 2 | Example 14 | Example 15 | Example 16 | Example 17 |
|---|---|---|---|---|---|---|
| Heat resistance | Good | Good | Good | Good | Good | Good |
| Water resistance | Good | Good | Good | Good | Good | Good |

**Table 2-2: Results of evaluations of heat resistance and water resistance in Examples and Comparative Examples**

| | Example 18 | Example 19 | Example 20 | Comparative Example 1 | Comparative Example 2 | Comparative Example 3 | Comparative Example 4 |
|---|---|---|---|---|---|---|---|
| Heat resistance | Good | Good | Good | Good | Good | Good | Poor |
| Water resistance | Good | Good | Good | Good | Good | Good | Poor |

The heat resistance tests demonstrate that samples A of Examples 1, 2, and 14 to 20 and Comparative Examples 1 to 3, which were crosslinked, exhibited practically usable heat resistance at 50°C, excluding sample A of Comparative Example 4, which was not crosslinked.

Among Examples and Comparative Examples where the above-described artificial bait in the form of elastomer or gel, the artificial bait having a spindle shape (shape that imitates fish), was able to be prepared, samples A of Examples 1, 2, 14, 16, 19, and 20 and Comparative Examples 1 to 4 were subjected to a cytotoxicity test. Samples A of Examples 1 and 2 and Comparative Examples 1 to 4 were subjected to a biodegradability test. Samples A of Examples 1 and 2 were subjected to a catch-of-fish test and an injection moldability test.

### <Cytotoxicity Test>

Samples A of Examples 1, 2, 14, 16, 19, and 20 and Comparative Examples 1 to 4 was subjected to a cytotoxicity test by the neutral red uptake assay in accordance with the specifications of JIS T0993-1:2020 and the specifications of ISO 10993-5:2009 to evaluate the cytotoxicity by quantitative evaluation. Specifically, as described below, the cytotoxicity was evaluated by preparing an extracted solution of each sample A, adding the extracted solution to cells to be cultured, and measuring the viable cell count 24 hours after the culture.

### (Preparation of Extracted Solution)

Sample A was prepared by the above-described method. However, all the processes were performed aseptically. In addition, the liquid mixture (artificial bait composition) was heated at 100°C for 15 minutes before it was poured into a worm mold for the purpose of sterilization. Thereafter, sample A was sliced into about 5 mm thick and weighed to take 200 mg of the slices, which were immersed in 2 mL of a fresh culture solution (a DMEM culture medium in which 10% by mass of FBS is added) and left to stand still at 37°C for 24 hours, and thus an extracted solution of sample A was prepared. The extracted solution was used for the experiment after the pH was adjusted with 50 mmol/L hydrochloric acid or 50 mmol/L sodium hydroxide so that the color of phenol red, which is contained in the extracted solution and is a pH indicator, as an index became orange, which indicates that the pH is in the neutral range.

### (Preparation of Cells)

BALB/3T3 cells (JCRB9005) at the 4th passage after the purchase from Cellbank Corp. were thawed from a frozen state and cultured for two or more passages for use.

### (Test Procedure)

Basic methods were in accordance with the specifications of ISO 10993-5:2009, and some parts thereof were modified as necessary. First, 2.0 × 10⁵ cells per petri dish were seeded in a 6-well petri dish on one day before the experiment.

After 24 hours, the culture solution was carefully taken away from the petri dish, and 2 mL of the sample extracted solution was dropped and cultured in the air containing 5 vol% of carbon dioxide at a temperature of 37°C for 24 hours.

After the culture, the sample extracted solution was carefully taken away from the petri dish, and the petri dish was washed with a 3 mL phosphate-buffered saline. Then, 2 mL of a culture solution containing 150 µg/mL of neutral red in terms of final concentration was gently poured, and the cells were cultured for 4 hours in the air containing 5 vol% of carbon dioxide under a condition of 37°C to allow the living cells to take in neutral red.

Thereafter, the culture solution containing neutral red was carefully taken away from the petri dish, and the petri dish was washed with a 3 mL phosphate-buffered saline. Then, 500 µL of a 1% acetic acid/50% methanol solution was poured into the petri dish, and the petri dish was shaken for 10 minutes to extract neutral red taken into the cells. The absorbance of this solution at a wavelength of 450 nm was measured to calculate a relative value of the cell count. At this time, the cell count in Comparative Example 4 where the crosslinking agent was not used was defined as 100% in order to compare the influence of the crosslinking agent. In addition, the cells were observed with a microscope. The tests were performed with N = 2 for each sample extracted solution.

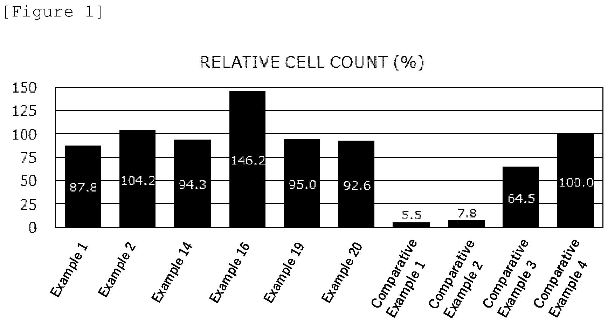

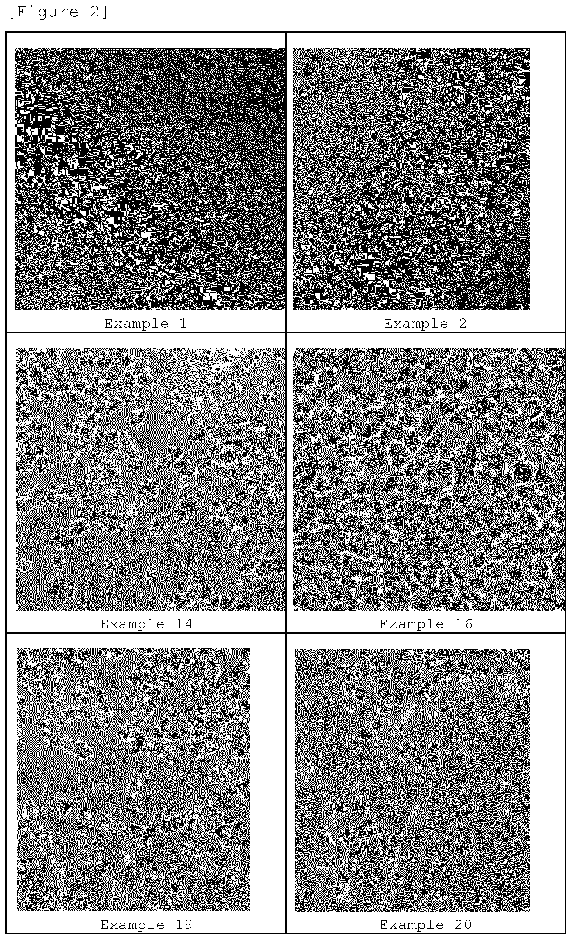

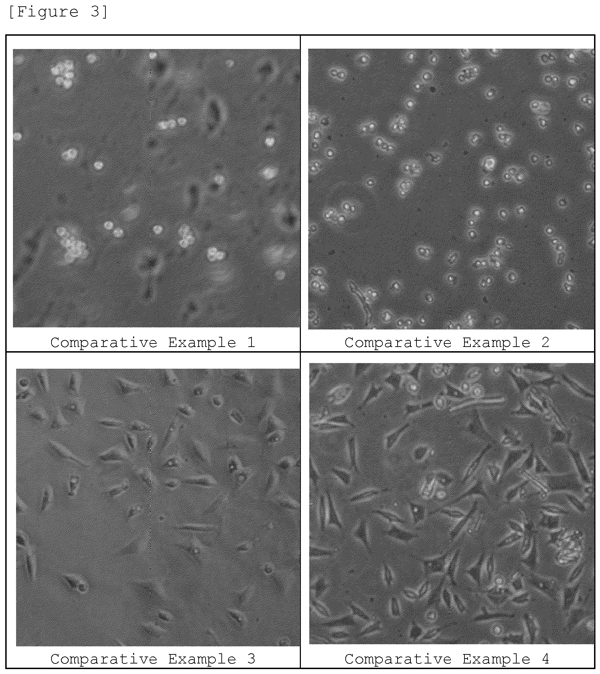

Figure 1 shows a graph of the relative cell counts obtained by the neutral red uptake assay, and Figure 2 and Figure 3 show microscopic images. In the microscopic images in Comparative Examples 1 and 2, the cells floated from the bottom surface of the petri dish and had small round shapes. The cell counts measured decreased remarkably. In the microscopic image in Comparative Example 3, cells in bad condition such that the cells floated and became small were not observed so much as compared to those in Comparative Examples 1 and 2, and elongated cells were observed; however, the cell count seemed to be small, and the cell count decreased by 35% in terms of relative cell count measured, so that sample A of Comparative Example 3 was determined to have cytotoxicity.

With regard to Example 1, the relative cell count decreased by 12.2%, but, in the microscopic image, the cells seemed to be well elongated and in good condition. In the microscopic images in Examples 2, 14, 16, 19, and 20, the cells seemed to be well elongated and in very good condition. In addition, as can be seen from the relative cell counts in those Examples, the cell counts were about the same as the cell count in Comparative Example 4 where the crosslinking agent was not used.

The above results demonstrate that in Comparative Examples 1 and 2 where an aldehyde was used as a crosslinking agent, strong cytotoxicity was exhibited, and in Comparative 3, cytotoxicity was also exhibited. On the other hand, in Example 1, the relative cell count decreased, but the extent is slight, and therefore sample A was determined to be free from cytotoxicity. In addition, being free from cytotoxicity was proved also from the microscopic image of good cells. A sign showing that cytotoxicity was exhibited was not recognized in Examples 2, 14, 16, 19, and 20.

Results of evaluations of the practicality, heat resistance, water resistance, and cytotoxicity in Examples 1, 2, 14, 16, 19, and 20 and Comparative Examples 1 to 4 are shown together in Table 3.

**Table 3: Results of evaluations in Examples and Comparative Examples**

| | Examples | | | | | | Comparative Examples | | | |
|---|---|---|---|---|---|---|---|---|---|---|
| | 1 | 2 | 14 | 16 | 19 | 20 | 1 | 2 | 3 | 4 |
| Practicality | Good | Good | Good | Good | Good | Good | Good | Good | Good | Poor |
| Heat resistance | Good | Good | Good | Good | Good | Good | Good | Good | Good | Poor |
| Water resistance | Good | Good | Good | Good | Good | Good | Good | Good | Good | Poor |
| Cytotoxicity | Good | Good | Good | Good | Good | Good | Poor | Poor | Poor | Good |

### <Biodegradability Test>

The biodegradability in seawater and the biodegradability in soil were evaluated for samples A of Examples 1 and 2 and Comparative Examples 1 to 4. Note that any of the compositions basically contains a protein and a polyhydric alcohol as main components excluding a crosslinking agent, and therefore all the substances which are produced by decomposition are not harmful for microorganisms, but rather are utilized for assimilation. Thus, when a microorganism occurred in the sample, the composition was regarded as being biodegraded by the microorganism and utilized for assimilation as a nutrient. Note that the occurrence of a microorganism can be confirmed through visual observation.

### (Biodegradability Test in Seawater)

Fresh seawater was taken from Oarai Fishing Port in Ibaraki prefecture and stored at 4 to 10°C for one week for use. In order to simulate a condition of using a soft worm, each sample A was immersed in distilled water for 30 minutes; a tightly sealed container containing 2 L of the seawater was then prepared for each sample; and each sample A was sunk in the seawater and aerated. This container was left to stand still in a room where the temperature was kept at about 25°C, and sample A was observed every day.

The results of the biodegradability test in the seawater are shown in Table 4.

**Table 4: Results of biodegradability test in seawater in Examples and Comparative Examples**

| | Example 1 | Example 2 | Comparative Example 1 | Comparative Example 2 | Comparative Example 3 | Comparative Example 4 |
|---|---|---|---|---|---|---|
| The number of days until sample A becomes invisible | 0 | 3 | 21 | 7 | 3 | 0 |
| The number of days until a microorganism begins to occur | 4 | 10 | | 24 | 11 | 4 |
| The number of days until turbidity and odor almost vanish | 13 | 17 | | | 18 | 11 |

In Comparative Example 4 and Example 1, sample A which was a solid became invisible about a half day after the start; a saprolegnia-like microorganism began to occur several days later; the microorganism became rampant; and the turbidity and odor almost vanished ten and several days later. Therefore, it is considered that the decomposition product of sample A was assimilated by the microorganism. In Example 2 and Comparative Example 3, sample A followed the same course except for a delay of about 4 to 7 days as compared to sample A of Comparative Example 4 and Example 1. On the other hand, in Comparative Examples 1 and 2 where an aldehyde was used, the number of days until sample A became invisible was significantly increased; besides, in Comparative Example 2, the occurrence of a microorganism is also significantly delayed; and in Comparative Example 1, a microorganism did not occur during an observation period of one month. This is considered to be due to the bactericidal and bacteriostatic action of the aldehyde.

### (Biodegradability Test in Soil)

The soil for the test was prepared for use by mixing fallen leaves near the Shikahama Bridge of the Arakawa river that flows in Tokyo and commercially available fully ripe leaf mold at a mass ratio of 1:1. In order to simulate a condition of using a soft worm, each sample A was immersed in distilled water for 30 minutes; a tightly sealed container in which 200 g of the soil was spread in a thickness of 2 cm was then prepared for each sample; sample A was placed on the soil to put the lid on the container and seal the container tightly; the container was then left to stand still in a room where the temperature was kept at about 25°C; and sample A was observed every day.

The results of the biodegradability test in the soil are shown in Table 5.

**Table 5: Results of biodegradability test in soil in Examples and Comparative Examples**

| | Example 1 | Example 2 | Comparative Example 1 | Comparative Example 2 | Comparative Example 3 | Comparative Example 4 |
|---|---|---|---|---|---|---|
| Number of days until mold begins to occur | 3 | 3 | 17 | | 5 | 3 |
| Number of days until sample A is covered with mold | 5 | 10 | | | 12 | 5 |
| Number of days until sample A becomes invisible | 24 | | | 24 | 28 | 19 |

In Comparative Example 4, Example 1, and Example 2, mold began to occur to sample A in several days; sample A was covered with mold and became gradually smaller; and in about 20 to 30 days, sample A became invisible. In addition, mold occurred at the part where sample A had been present. Only sample A of Example 2 was left without vanishing due to dryness after it became gradually smaller after being covered with mold. Sample A of Comparative Example 3 followed a similar course, but each stage took about twice longer than that in Comparative Example 4 and the like. On the other hand, mold began to occur slightly to sample A of Comparative Example 1 after a quite a bit of days, but sample A was not covered with mold, and there was little change thereafter until the end of the observation period. As for Comparative Example 2, sample A became gradually smaller and became invisible by the 24th day, but mold never occurred to sample A or at the part where sample A had been present.

The above results clearly demonstrate that when an aldehyde or an epoxy compound is used as a crosslinking agent, the biodegradability is remarkably lowered by the influence of the aldehyde or the epoxy compound even if a protein and a polyhydric alcohol which are raw materials derived from organisms are used as main components. On the other hand, the use of alum or transglutaminase as a crosslinking agent demonstrates that the biodegradability which is almost the same as that at the time when the crosslinking agent is not used is exhibited, which is hardly influenced by the use of the crosslinking agent.

### <Catch-of-Fish Test>

A catch-of-fish test was actually conducted using samples A of Examples 1 and 2 in Oarai Seashore. The catch-of-fish test was conducted by four users each using one sample A of Example 1 and one sample A of Example 2. As a result, it was confirmed that all of samples A of the four users withstood the use for two hours and had water resistance at a practically usable level. In addition, during the fishing, it was confirmed that each of samples A of Examples 1 and 2 was moving with fish-gathering power as a soft worm, and it was also confirmed that fish was actually caught although samples A were not colored and did not contain a condiment.

### <Injection Moldability Test>

In Examples 1 and 2, the materials corresponding to the respective components were blended in such a way that: the composition (unit: % by mass) of each component was as shown in Table 1; and the resultant mixture was mixed with a kneader under a condition of making the mixture uniform while the temperature of the mixture was kept at 80°C, and thus a liquid mixture was obtained. Subsequently, the mixture was poured into a tray and cooled at room temperature until the temperature of the mixture became about 20°C to solidify the mixture, and thus a block-shaped artificial bait composition in the form of elastomer or gel was prepared. From the artificial bait compositions of Examples 1 and 2 thus obtained, sample B-1 and sample B-2 were prepared as described below.

### (Preparation of Sample B-1)

Each of the above block-shaped artificial bait compositions in the form of elastomer or gel was warmed in a vessel containing boiling water until the composition melted. Subsequently, the molten artificial bait composition was poured into a female die having a shape of dumbbell specimen No.1 for a tensile test and cooled at room temperature until the temperature of the composition became about 20°C to solidify the composition. Thus, sample B-1 as a dumbbell specimen molded through melting in the vessel containing boiling water was prepared in each of Examples 1 and 2.

### (Preparation of Sample B-2)

Each of the above block-shaped artificial bait compositions in the form of elastomer or gel was roughly cut by hand and then crushed into about 5 to 10 mm diameters using a mincer to obtain a granular artificial bait composition. Then, the granular artificial bait composition was injection-molded in a female die having a shape of a dumbbell specimen No. 1 for a tensile test using an injection molding machine (set temperature 150°C). Thus, sample B-2 as a dumbbell specimen molded by injection molding was prepared in each of Examples 1 and 2.

Samples B-1 and B-2 were subjected to a tensile test at room temperature (within a range of 20 to 25°C) using a tension/compression testing device (trade name "STA-1150," manufactured by A&D Company Limited) in accordance with the specifications in JIS K6251:2017. As a result, in both of Examples 1 and 2, there was little difference in the maximum stress and Young's modulus between sample B-1 and sample B-2, which demonstrates that sample B-1 and sample B-2 can be molded by injection molding without any problem.

## Claims

1. A biodegradable artificial bait composition being a composition to be used for an artificial bait for fishing, the composition comprising:
10 to 30% by mass of gelatin;
25 to 80% by mass of a polyhydric alcohol;
9 to 55% by mass of water, and
0.005 to 3% by mass of at least one crosslinking agent selected from the group consisting of alum, transglutaminase, monosaccharides, and polyphenols.

2. The biodegradable artificial bait composition according to claim 1, wherein the polyhydric alcohol is at least one selected from the group consisting of glycerol, 1,3-butylene glycol, propylene glycol, and sugar alcohols.

3. The biodegradable artificial bait composition according to claim 1, further comprising 0.01 to 10% by mass of a polysaccharide.

4. The biodegradable artificial bait composition according to claim 1, determined to have no cytotoxicity in a cytotoxicity test specified in ISO 10993-5:2009.

5. The biodegradable artificial bait composition according to claim 1, formed into a block-like shape, a grain-like shape, or a pellet-like shape.

6. A biodegradable artificial bait obtained by shaping the biodegradable artificial bait composition according to any one of claims 1 to 5.
